# EUROPEAN PATENT APPLICATION

(11) **EP 2 600 293 A1**
(43) Date of publication of application: **05.06.2013**
(21) Application number: 12195111.5
(22) Date of filing: 30.11.2012
(51) Int. Cl.: G06Q 10/06

(54) **SIMULATION AND VISULIZATION FOR PROJECT PLANNING AND MANAGEMENT**

(30) Priority: 02.12.2011 US 201113310047
(71) Applicant: The Boeing Company, Chicago, IL 60606-2016 (US)
(72) Inventor: Burnett, Gabriel A, Newcastle, WA Washington 98059 (US); Hu, Yuanxin Charles, Newcastle, WA Washington 98059 (US)
(74) Representative: Howson, Richard G.B.

(57) **Abstract**

A method and apparatus for generating a project plan from project description information (206) for a project comprising a plurality of tasks (110). The project description information (206) may include information describing precedence relationships between the tasks (110), information indicating durations of the tasks (110), and information indicating variability (116) in the durations of the tasks (110). A simulation model (228) is generated for the project using the project description information (206). The simulation model (228) is run for a plurality of runs (234) to identify a subset of tasks (110) forming a critical path and to generate simulation results data (248). A project network presentation (256) is generated from the simulation results data (248). The project network presentation (256) includes the identified subset of the tasks (1101) forming the critical path.

## Description

### BACKGROUND

The present disclosure relates generally to planning and managing projects, such as manufacturing projects, that are defined by a number of tasks. In particular, the present disclosure relates to a system and method for project simulation and analysis, and for generating a graphical representation of project simulation results.

A project, such as a manufacturing project, may be defined by a number of tasks. The project is completed by completing the number of tasks. The number of tasks that define a project may be defined in terms of resources that are needed to complete a task, the amount of time that it takes to complete a task from the time that the task is started, and relationships between the tasks. The amount of time that it takes to complete a task from the time that the task is started may be referred to as the duration of the task. The relationships between the tasks that are performed to complete a project may be defined in terms of precedence constraints. Precedence constraints define which tasks that are performed to complete a project may need to be completed before other tasks may begin.

Project planning includes scheduling the various tasks needed to complete the project and allocating appropriate resources to those tasks in order to achieve desired goals for completing the project. For example, one such goal may be to complete the project within a specified time period using specified available resources. As another example, project planning may include scheduling the various tasks needed to complete a project and assigning available resources to those tasks in order to minimize the total time required to complete the project.

Project management includes monitoring a project as tasks are completed and making any necessary adjustments to the task schedule. Project management also may include reallocation of resources between tasks in response to changing conditions.

Currently, various methods are used for project planning and management. Many of these methods are available in commercial software packages. Additionally, many of these methods employ the critical path method or one or more variations on the critical path method.

The critical path method is an algorithm for scheduling a set of project tasks. The critical path method is commonly used with all forms of projects, including construction, aerospace and defense, software development, research projects, product development, engineering, and plant maintenance, among others. The critical path method may be applied to any project with interdependent tasks.

The critical path method employs a model of the project that includes a list of all of the tasks required to complete the project, the duration that each task will take to complete, and the dependencies between the tasks. Using this information, the critical path method calculates the longest duration sequence of planned tasks from the beginning to the end of the project and the earliest and latest that each task can start and finish without making the project longer. The process identifies tasks that are part of the longest duration sequence as "critical". Thus, the longest duration sequence of planned tasks from the beginning to the end of the project is the "critical path". In other words, the critical path is the sequence of planned tasks from the beginning to the end of the project which add up to the longest overall duration. The critical path determines the shortest time possible to complete the project. Any delay of a task on the critical path directly impacts the planned project completion date.

A sequence of tasks from the beginning to the end of a project with a total duration shorter than the duration of the critical path is called a sub-critical or non-critical path. Tasks on such a path can be delayed somewhat without increasing the duration of the project as a whole. The amount by which a task on a non-critical path can be delayed without delaying completion of the project as a whole may be referred to as float or slack.

Originally, the critical path method considered only logical dependencies between tasks. Since then, it has been expanded to allow for the inclusion of resources related to each task, through task-based resource assignments and resource leveling. A resource-leveled schedule of tasks may take into account delays due to the unavailability of a resource at the required time that may cause a previously shorter path to become the longest or most "resource critical" path. A related concept is called critical chain project management. Critical chain project management attempts to protect task and project durations from unforeseen delays due to resource constraints.

Project schedules may change on a regular basis. The critical path method may be used for continuous monitoring of the schedule. The critical path method allows a project manager to track the critical tasks, and alerts the project manager to the possibility that non-critical tasks may be delayed beyond their total slack, thus creating a new critical path and delaying project completion. In addition, the method may incorporate the concepts of stochastic predictions, using, for example, the Program Evaluation and Review Technique.

The Program Evaluation and Review Technique, commonly abbreviated PERT, is a statistical tool that is designed to analyze and represent the tasks involved in completing a given project. The Program Evaluation and Review technique processes data representing the tasks needed to complete a project, the inter dependence of those tasks, and estimates of the time and range of time necessary to complete each task. Such time expectations include estimates of "most likely time", "optimistic time", and "pessimistic time" for each task. The Program Evaluation and Review technique provides information on the outlook for completing a project on time and highlights conditions that may delay project completion and thus may call for management decisions. The Program Evaluation and Review technique reveals and defines both criticalness and slack in the flow plan or the network of sequential tasks that must be performed to complete the project. The technique compares current expectations with scheduled completion dates and computes the probability for meeting scheduled dates. The Program Evaluation and Review technique may be used to simulate the effect of various options on the project schedule before an option is implemented.

A plan for performing the tasks needed to complete a project may be presented in the form of a project network. A project network also may be referred to as a network chart. A project network is a graph or flow chart depicting a sequence for completing the various tasks that need to be performed to complete a project. A project network may depict a sequence of tasks by showing the various tasks that need to be performed to complete a project as nodes and the dependencies between the tasks as edges connecting the nodes.

Current systems and methods for project planning and management may be improved. For example, current systems and methods for project planning and management do not adequately take into account the variability in the duration of tasks needed to complete a project. Furthermore, current systems and methods do not provide effective presentations of task and project information that may be useful for project planning and management.

Accordingly, it would be desirable to have a method and apparatus that takes into account one or more of the issues discussed above, as well as other possible issues.

### SUMMARY

An embodiment of the present disclosure provides a method for generating a project plan. The method includes receiving, by a processor unit, project description information for a project comprising a plurality of tasks. The project description information comprises information describing precedence relationships between tasks, information indicating durations of the tasks, and information indicating variability in the durations of the tasks. A simulation model for the project is generated by the processor unit using the project description information. The simulation model is run for a plurality of runs to identify a subset of tasks forming a critical path and to generate simulation results data. A project network presentation is generated from the simulation results data. The project network presentation includes the identified subset of the tasks forming the critical path.

Another embodiment of the present disclosure provides an apparatus comprising a processor unit, a simulation model generator, a simulator, and a presentation generator. The processor unit is configured to receive project description information for a project comprising a plurality of tasks. The project description information comprises information describing precedence relationships between tasks, information indicating durations of the tasks, and information indicating variability in the durations of the tasks. The simulation model generator is configured to generate a simulation model for the project using the project description information. The simulator is configured to run the simulation model for a plurality of runs to identify a subset of tasks forming a critical path and to generate simulation results data. The presentation generator is configured to generate a project network presentation from the simulation results data. The project network presentation includes an indication of the subset of the tasks forming the critical path.

Another embodiment of the present disclosure provides a method for generating a project plan. Project description information for a project comprising a plurality of tasks is received by a processor unit. The project description information comprises information describing precedence relationships between tasks, information indicating durations of the tasks, and information indicating variability in the durations of the tasks. A project network presentation is generated from the project description information. The project network presentation includes an indication of a subset of the tasks forming a critical path for completing the project. The project network presentation includes nodes corresponding to the tasks and edges connecting the nodes to indicate a relationship between the nodes. The nodes are highlighted to indicate likelihoods that corresponding tasks are on the critical path.

The features and functions can be achieved independently in various embodiments of the present disclosure or may be combined in yet other embodiments in which further details can be seen with reference to the following description and drawings.

### BRIEF DESCRIPTION OF THE DRAWINGS

The novel features believed characteristic of the illustrative embodiments are set forth in the appended claims. The illustrative embodiments, however, as well as a preferred mode of use, further objectives, and features thereof will best be understood by reference to the following detailed description of an illustrative embodiment of the present disclosure when read in conjunction with the accompanying drawings, wherein:
**Figure 1** is an illustration of a block diagram of a project planning and management environment in accordance with an illustrative embodiment;
**Figure 2** is an illustration of a block diagram of a project planning and management system in accordance with an illustrative embodiment;
**Figure 3** is an illustration of a table of example project description information for input to a project planning and management system in accordance with an illustrative embodiment;
**Figure 4** is an illustration of a table of example results of a deterministic critical path method calculation in accordance with an illustrative embodiment;
**Figure 5** is an illustration of a project network diagram of example results of a deterministic critical path method calculation in accordance with an illustrative embodiment;
**Figure 6** is an illustration of a table of example results of a Monte Carlo project simulation in accordance with an illustrative embodiment;
**Figure 7** is an illustration of a project network diagram of example results of a Monte Carlo project simulation in accordance with an illustrative embodiment;
**Figure 8** is an illustration of a flowchart of a process for project planning in accordance with an illustrative embodiment;
**Figure 9** is an illustration of a flowchart of a process for running a simulation model for project planning in accordance with an illustrative embodiment;
**Figure 10** is an illustration of a block diagram of an aerospace vehicle manufacturing and service method in accordance with an illustrative embodiment;
**Figure 11** is an illustration of a block diagram of an aerospace vehicle for which an illustrative embodiment may be implemented; and
**Figure 12** is an illustration of a block diagram of a data processing system in accordance with an illustrative embodiment.

### DETAILED DESCRIPTION

The different illustrative embodiments recognize and take into account a number of different considerations. "A number", as used herein with reference to items, means one or more items. For example, "a number of different considerations" means one or more different considerations.

The different illustrative embodiments recognize and take into account that effective management of limited resources is desirable for competing successfully in the global manufacturing environment. In analyzing a manufacturing project or other project, decision makers are often faced with the challenge of allocating limited resources among project tasks and determining where to focus improvement efforts. The different illustrative embodiments recognize and take into account that decision makers desire improved tools for project planning and management.

In particular, the different illustrative embodiments recognize and take into account that an improvement in accounting for uncertainty in task durations is desirable. Current methods for project planning and management may not statistically account for path convergence and may tend to underestimate project duration.

The different illustrative embodiments recognize and take into account that simulation is a useful tool for project planning and management. The use of simulation in project planning and management provides the ability to quantify the potential effects of uncertainty. Simulation is useful in identifying project risk and supporting mitigation efforts. Simulation is also useful in supporting resource allocation in projects.

However, the different illustrative embodiments also recognize and take into account that, currently, simulation is not often used by project managers in the actual practice of project management in real-world situations. Project managers may be reluctant to make use of simulation for various reasons. For example, one hindrance to the use of simulation in project planning and management is the time, effort, and specialized knowledge that may be needed to construct accurate models for use in the simulation.

Project planning and management, in accordance with the illustrative embodiments described herein, addresses the limitations of traditional project planning and management tools by using simulation to account for variability in task durations. The illustrative embodiments provide an interactive method and visualization of results that improves understanding of and comfort with the simulation methods employed. In accordance with an illustrative embodiment, the burden associated with the use of simulation for project planning and management is decreased by providing for the automatic generation of simulation models.

Thus, the different illustrative embodiments provide a decision support tool and methodology for generating project networks that effectively convey project information to decision makers for project planning and management, including the allocation of resources among various tasks. The illustrative embodiments provide a method and apparatus for automatic generation of a simulation model from information describing project tasks and relationships between the tasks. Statistical measurements indicating risks associated with project tasks may be identified from results obtained by running the simulation model. The illustrative embodiments provide a visualization of the results obtained by running the simulation to effectively convey project information to decision makers for use in project planning and management, including the allocation of resources to the tasks.

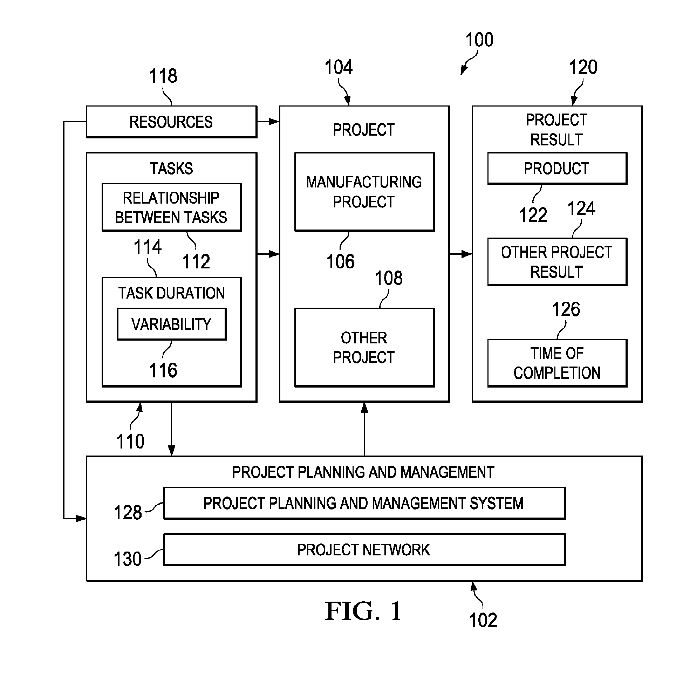

Turning first to Figure 1, an illustration of a block diagram of a project planning and management environment is depicted in accordance with an illustrative embodiment. Project planning and management environment 100 may be used for project planning and management 102 of project 104. For example, without limitation, project 104 may be manufacturing project 106 or other project 108.

Project 104 is defined by tasks 110. Tasks 110 are activities that must be completed to complete project 104. Relationship between tasks 112 defines which of tasks 110 need to be completed before other tasks may be started. Task duration 114 is the time it takes to complete individual tasks 110. In the real world, a precise reliable value for task duration 114 may not be obtained before a task begins. Therefore, task duration 114 is often subject to variability 116.

Resources 118 may be employed to complete project 104. Resources 118 may include human or other capital resources. Resources 118 may be distributed among tasks 110.

Performing tasks 110 using resources 118 results in project result 120. Depending on the nature of project 104, project result 120 may be product 122 or other project result 124. Scheduling of tasks 110 and application of resources 118 to tasks 110 may determine time of completion 126 of project result 120.

Project planning and management 102 may involve scheduling and managing tasks 110 and allocating resources 118 in a manner that achieves project result 120 in a desired time of completion 126. Project planning and management 102 may employ project planning and management system 128. Project planning and management system 128 may be used to generate project network 130. Project network 130 is a graphical representation of the sequence in which tasks 110 are to be completed to complete project 104. Project network 130 may show tasks 110 and relationship between tasks 112.

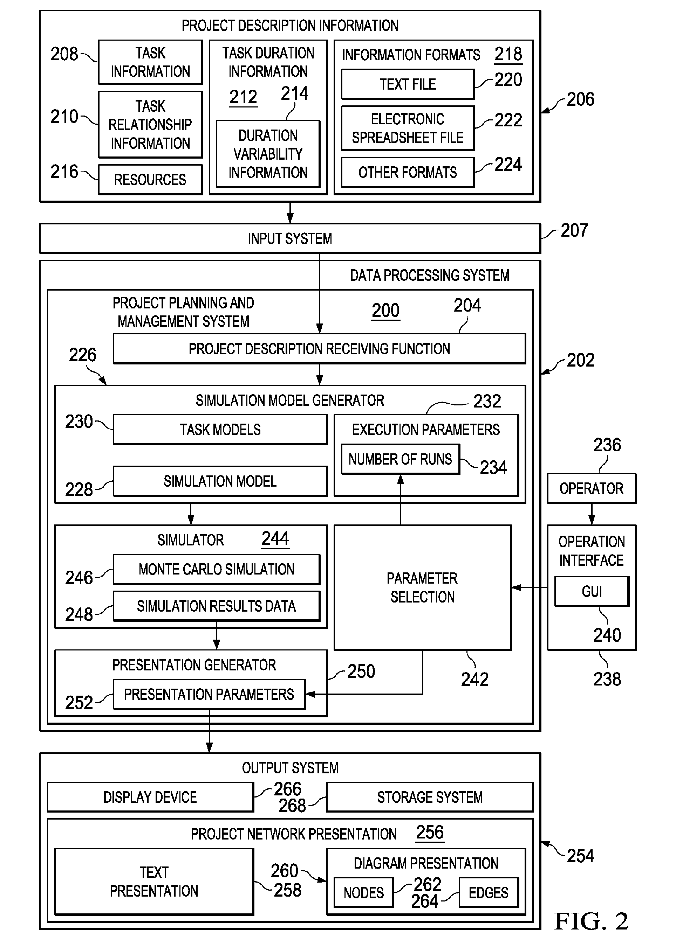

Turning now to Figure 2, an illustration of a block diagram of a project planning and management system is depicted in accordance with an illustrative embodiment. In this example, project planning and management system 200 is an example of one implementation of project planning and management system 128 in Figure 1.

In accordance with an illustrative embodiment, the functionality of project planning and management system 200, described herein, may be implemented in software running on data processing system 202. For example, without limitation, data processing system 202 may be a general purpose computer or other data processing device that is programmed to perform the functions of project planning and management system 200. The functionality of project planning and management system 200 may be implemented in data processing system 202 using any programming language or combinations of programming languages. For example, without limitation, the functionality of project planning and management system 200 may be implemented in the Java programming language, using another programming language, or a combination of programming languages.

In accordance with an illustrative embodiment, project planning and management system 200 may include project description receiving function 204, simulation model generator 226, simulator 244, and presentation generator 250. Project planning and management system 200 also may include other functions as described herein.

Project description receiving function 204 may be configured to receive project description information 206 for use by project planning and management system 200. Project description receiving function 204 may be configured to receive project description information 206 that is provided to data processing system 202, to pull project description information 206 from another data processing system, or both.

Project description information 206 may include task information 208, task relationship information 210, and task duration information 212. Task information 208 may include information that identifies the tasks that need to be performed to complete a project. Task relationship information 210 may include information that identifies which tasks must be completed before other tasks may be started.

Task duration information 212 may include information that identifies the time that it takes to complete a task from start to finish. For any given task, task duration information 212 may comprise a single time value. However, task duration information 212 preferably also may include duration variability information 214. Duration variability information 214 may include information that identifies possible variation or uncertainty in the time that it takes to complete a task. For example, without limitation, duration variability information 214 may include a range of time values for a task. Duration variability information 214 may or may not include information that indicates the probabilistic distribution of task duration over the range of time values for a task.

In accordance with an illustrative embodiment, project description information 206 may be provided to project description receiving function 204 in a variety of information formats 218. Preferably, project description receiving function 204 may be configured to receive project description information 206 in information formats 218 that are currently being used by project managers or other operators on existing data processing systems. For example, without limitation, information formats 218 may include text file 220, electronic spreadsheet file 222, other formats 224, or various combinations of formats. For example, without limitation, electronic spreadsheet file 222 may be generated using a word processor or other computer program. For example, without limitation, other formats 224 may include an Extensible Markup Language (XML) format. Extensible Markup Language is platform independent and widely accepted.

Project description receiving function 204 may receive project description information 206 via input system 207. Input system 207 may include a number of systems for receiving data in a number of information formats 218. For example, without limitation, input system 207 may include a keyboard and monitor, a disk drive for reading information from a portable magnetic disk or optical disk, a port connection configured to receive a portable memory device, a wired or wireless connection to a computer network, or other data input systems or combinations of systems. In one example, without limitation, part or all of input system 207 may be provided as part of data processing system 202.

Simulation model generator 226 is configured to generate simulation model 228. Simulation model 228 is a model of a project network that may be run on simulator 244. For example, simulation model generator 226 may automatically generate simulation model 228 using project description information 206 in combination with existing task models 230.

Simulation model generator 226 may determine an appropriate statistical form for modeling the duration of tasks based on task duration information 212 and duration variability information 214 as provided in project description information 206. For example, without limitation, a triangular distribution may be an appropriate statistical form for modeling the duration of a task where task duration information 212 is a single task duration value and duration variability information 214 includes a single value for maximum task duration and a single value for minimum task duration. Another appropriate statistical form, such as a uniform, Gaussian, lognormal, or other distribution, may be determined for modeling the duration of tasks if task duration information 212 and duration variability information 214 includes other information that suggests that another statistical form may be appropriate.

Simulation model 228 may be defined by execution parameters 232. Number of runs 234 is an example, without limitation, of execution parameters 232. Number of runs 234 is a number of times that simulation model 228 will be run by simulator 244 to obtain simulation results data 248. For example, without limitation, number of runs 234 may be 1000 runs or any other number of runs.

One or more of execution parameters 232 may be selectable by operator 236. For example, without limitation, operator 236 may be a project manager or other human operator using project planning and management system 200 for planning a project, managing a project, or both. Operator 236 may employ operator interface 238 to make parameter selection 242. For example, without limitation, operator interface 238 may include graphical user interface (GUI) 240. Graphical user interface 240 may prompt operator 236 to make parameter selection 242. In the absence of parameter selection 242 by operator 236, default values for execution parameters 232 may be used.

Simulator 244 is configured to run simulation model 228 in accordance with execution parameters 232. For example, simulator 244 may run simulation model 228 for number of runs 234 to perform Monte Carlo simulation 246. Information from number of runs 234 of simulation model 228 is compiled by simulator 244 to provide simulation results data 248.

Presentation generator 250 is configured to generate a useful presentation of simulation results data 248. Presentation generator 250 may employ various presentation parameters 252. Presentation parameters 252 may define how simulation results data 248 is to be presented. In accordance with an illustrative embodiment, one or more of presentation parameters 252 may be selectable by operator 236. For example, without limitation, operator 236 may select presentation parameters, such as color schemes and the association of task parameters with graphic attributes. Operator 236 may use operator interface 238 to make parameter selection 242 of presentation parameters 252.

Presentation generator 250 may generate project network presentation 256 from simulation results data 248. Project network presentation 256 may include text presentation 258, diagram presentation 260, or both. Diagram presentation 260 may present a project network as a graphical display of nodes 262 connected by edges 264, where nodes 262 correspond to tasks, and edges 264 indicate relationships between tasks.

In accordance with an illustrative embodiment, presentation generator 250 may be configured to convey information in diagram presentation 260 using a variety of operator selectable indicators. For example, without limitation, information may be conveyed in diagram presentation 260 using node shape, edge shape, size, color, labels, tooltips, JavaScript links to other graphics, or other indicators either alone or in any combination.

In accordance with an illustrative embodiment, diagram presentation 260 also may provide an interface whereby operator 236 may obtain additional information. For example, without limitation, diagram presentation 260 may be configured such that operator 236 may select nodes 262, edges 264, or both, to obtain additional information related to corresponding tasks and relationship between tasks. For example, diagram presentation 260 may be configured such that when operator 236 controls a mouse to hover a curser over one of nodes 262 in diagram presentation 260, a dialog box appears which provides additional information. This additional information may include one or more links to further additional information.

Project network presentation 256 generated by presentation generator 250 may be provided to output system 254. Output system 254 may include display device 266 on which project network presentation 256 is displayed. For example, without limitation, display device 266 may be a computer monitor or other display device. Output system 254 also may include one or more input devices for allowing operator 236 to interact with project network presentation 256 displayed on display device 266.

Alternatively or additionally, output system 254 may include storage system 268. Storage system 268 may include any device or system on which project network presentation 256, simulation results data 248, or both, may be stored for later use.

The illustration of Figure 2 is not meant to imply physical or architectural limitations to the manner in which different illustrative embodiments may be implemented. Other components in addition to, in place of, or both, in addition to and in place of the ones illustrated may be used. Some components may be unnecessary in some illustrative embodiments. Also, the blocks are presented to illustrate some functional components. One or more of these blocks may be combined or divided into different blocks when implemented in different illustrative embodiments.

For example, input system 207, operator interface 238, and output system 254 may be implemented, in whole or in part, in data processing system 202. Input system 207, operator interface 238, and output system 254 may be implemented, in whole or in part, using a number of shared components.

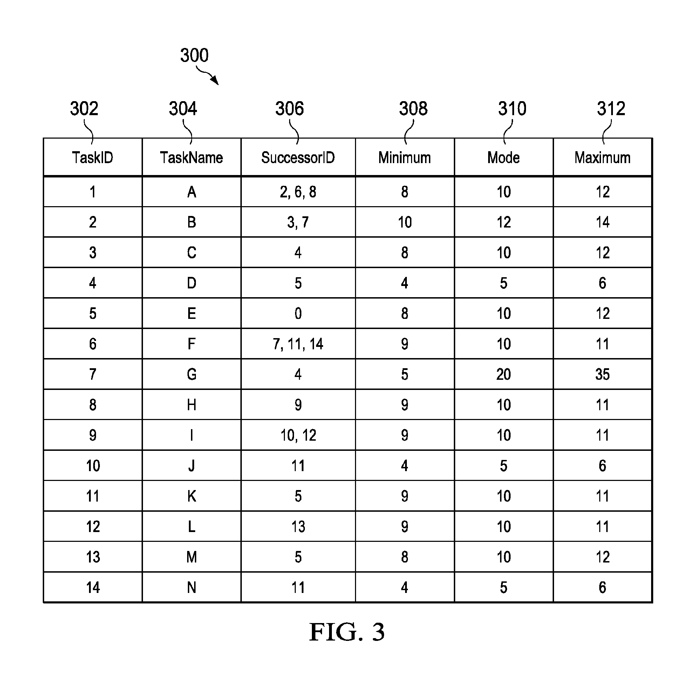

A specific example of an illustrative embodiment is presented with reference to Figures 3-7. In this example, the illustrations of Figures 3-7 are examples of project network presentation 256 in Figure 2. The illustrative embodiments are not limited to the specific example presented.

Turning now to Figure 3, an illustration of a table of example project description information for input to a project planning and management system is depicted in accordance with an illustrative embodiment. In this example, the information in table 300 is an example of project description information 206 in Figure 2.

The information in table 300 describes a project with fourteen tasks. Each task has a task identification number 302, a task name 304, and a list of successor tasks referenced by their identification number 306. Each task also has task duration information. In this example, task durations are assumed to follow triangular distributions. Therefore, in this example, task duration information includes minimum 308, mode 310, and maximum 312 time values.

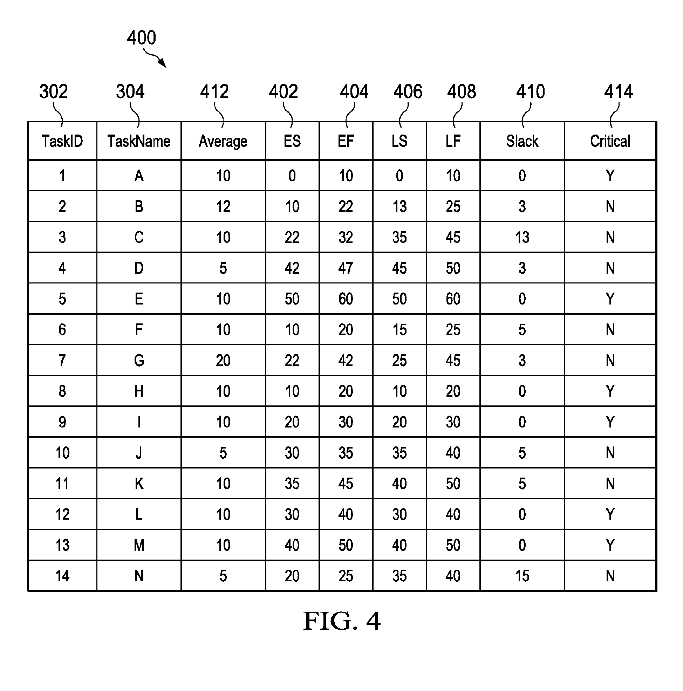

Turning now to Figure 4, an illustration of a table of example results of a deterministic critical path method calculation is depicted in accordance with an illustrative embodiment. In this example, the information in table 400 is the result of a deterministic critical path method calculation applied to the information in table 300 in Figure 3. Early start 402, early finish 404, late start 406, late finish 408, and slack 410 are calculated for each task in the project network. In this case, basic critical path method calculations are performed using expected task durations and do not account for task duration variability. Average task durations 412 are identified based on the assumption of triangularly distributed processing times. Tasks are labeled as critical 414 if the slack for the task is equal to zero. Thus, table 400 indicates which tasks are on the critical path.

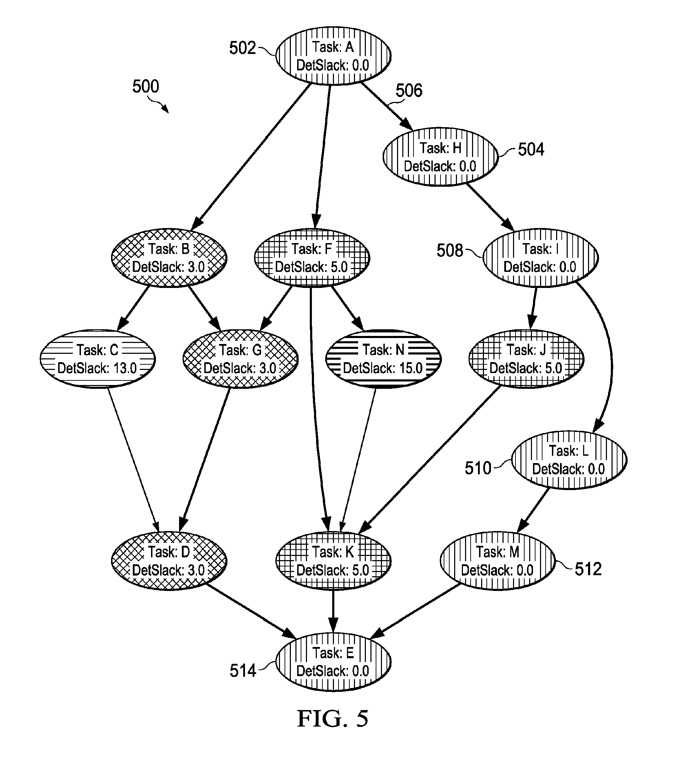

Turning now to Figure 5, an illustration of a project network diagram of example results of a deterministic critical path method calculation is depicted in accordance with an illustrative embodiment. In this example, network diagram 500 is a graphical representation of the information in table 400 in Figure 4. In accordance with an illustrative embodiment, network diagram 500 may be generated automatically based on the results of the basic critical path method calculations described above. One or more of the parameters used to generate network diagram 500 may be selected by an operator.

In this example, network diagram 500 is an activity-on-node type network diagram. Tasks are represented by nodes, such as nodes 502 and 504. The precedence constraint relationships between the tasks are represented by edges connecting the nodes. For example, edge 506 connecting nodes 502 and 504 indicates the precedence constraint relationship between the tasks represented by nodes 502 and 504. In this case, edge 506 is in the form of an arrow pointing from node 502 to node 504. Thus, in this case, edge 506 indicates that Task A, represented by node 502, must be completed before Task H, represented by node 504, may begin. In this example, both the task name and slack are listed in the nodes.

In accordance with an illustrative embodiment, the nodes may include identifying characteristics that indicate subsets of nodes based on the slack values of the tasks represented by the nodes in the subsets of nodes. In this example, subsets of the nodes are colored with different colors based on different ranges of slack values of the tasks represented by the nodes in the subsets of nodes. For example, without limitation, the colors of the nodes in the subsets of the nodes may range along a continuous color spectrum from blue, for tasks with the largest slack values, to red, for tasks on the critical path. In this example, different colors are represented by different hash marks for the nodes in Figure 5.

Preferably, at least three subsets of nodes, including a subset of nodes representing tasks on the critical path and at least two other subsets of nodes that are not on the critical path, may be highlighted using identifying characteristics in this or another manner. Highlighting subsets of nodes in this manner allows a project planner or project manager to easily identify tasks that are on the critical path, tasks that are not on the critical path but that are more likely to fall on the critical path due to changing conditions, and tasks that are less likely to fall on the critical path due to changing conditions. In this example, nodes 502, 504, 508, 510, 512, and 514 may be colored red. This indicates that the corresponding Task A, Task H, Task I, Task L, Task M, and Task E, respectively, are on the critical path.

In this example, the thickness of the edges also is scaled based on slack values. Alternatively, other colors, other identifying characteristics, or any combinations of identifying characteristics may be used to indicate slack values associated with the nodes or subsets of the nodes.

In accordance with an illustrative embodiment, network diagram 500 also may provide an interface whereby an operator may obtain additional information. For example, without limitation, network diagram 500 may be configured such that an operator may select displayed nodes, edges, or both, to obtain additional information related to corresponding tasks and relationships between tasks. For example, network diagram 500 may be configured such that when an operator controls a mouse to hover a curser over one of the nodes in network diagram 500, a dialog box appears which provides additional information. This additional information may include one or more links to further additional information.

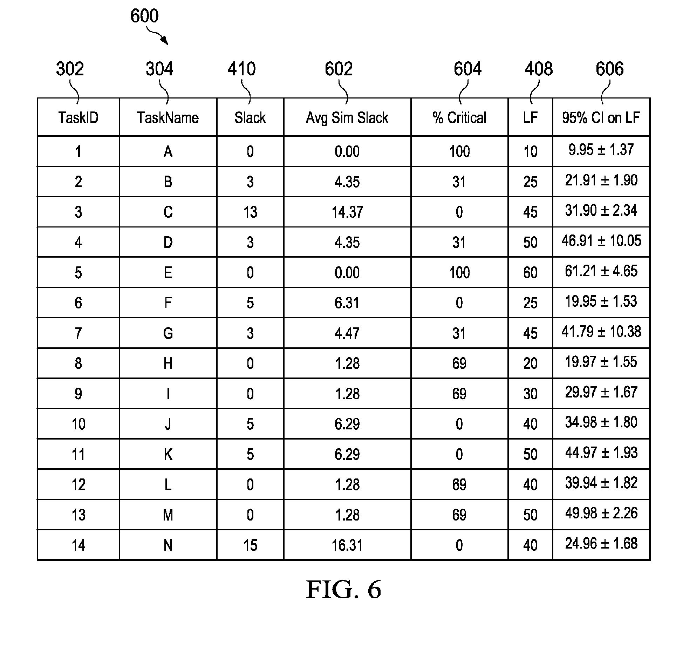

Turning now to Figure 6, an illustration of a table of example results of a Monte Carlo project simulation is depicted in accordance with an illustrative embodiment. In a Monte Carlo simulation, a simulation model is run a number of times. The results of the number of runs are combined to obtain an overall result. In this example, table 600 indicates the results of a Monte Carlo simulation with 1000 runs using a simulation model derived from the project description information in table 300 in Figure 3.

Table 600 provides summary statistics for a variety of measures. Slack 410 and late finish 408 correspond to the deterministic critical path method calculations. Average simulated slack 602 is an average of the slack across all 1000 runs. Percent Critical 604 is the percentage of runs in which a task has zero slack. This value thus indicates the percentage of the total number of simulation runs that a task is determined to be on the critical path. The 95 percent confidence interval on late finish 606 is based on the late finish calculations across all 1000 runs.

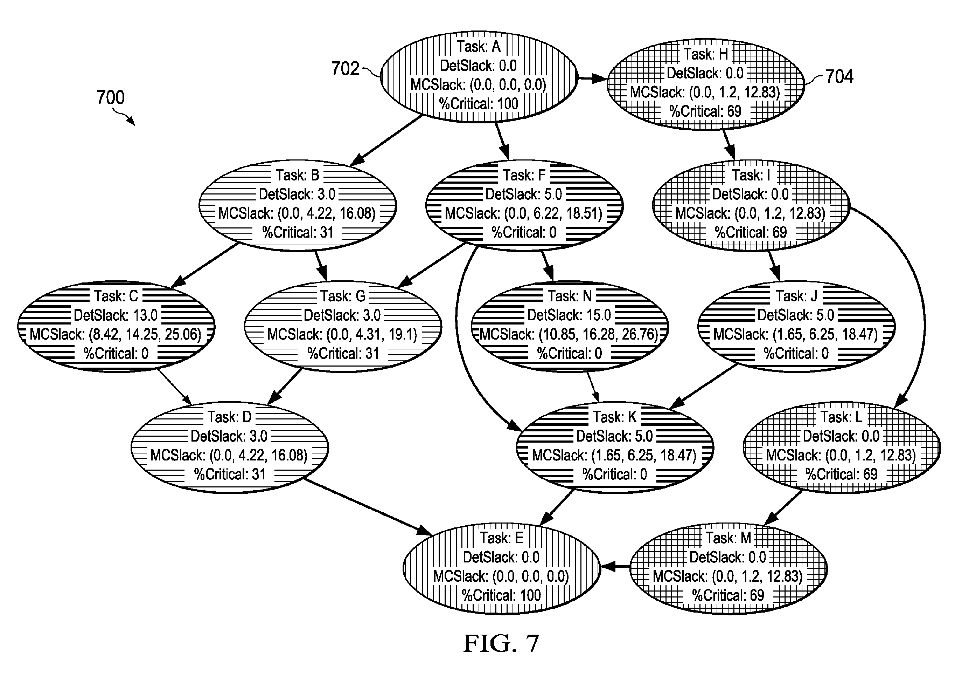

Turning now to Figure 7, an illustration of a project network diagram of example results of a Monte Carlo project simulation is depicted in accordance with an illustrative embodiment. In this example, network diagram 700 is a graphical representation of the information presented in table 600 in Figure 6.

In this example, the tasks are represented by nodes and the precedence constraints by edges. The node label contains the task name, the slack computed using deterministic task durations, the range of slack values observed in the simulation, and the percentage of time that a task is on the critical path. The tuple of slack value statistics is the minimum, average, and maximum of the slack values observed across all runs of the simulation.

In this example, nodes 702 and 704 are highlighted differently to indicate that the tasks corresponding to nodes 702 and 704 are determined to be in the critical path for different percentages of the total number of simulation runs. Thus, nodes 702 and 704 are highlighted differently to indicate different likelihoods that that the tasks corresponding to nodes 702 and 704 will be on the critical path. For example, without limitation, the nodes may be colored using different colors based on the percentage of simulation runs that a task is on the critical path. For example, without limitation, the color spectrum may range from blue, for tasks with the lowest percentage of runs on the critical path, to red, for tasks with the highest percentage of runs on the critical path. In this example, different colors are represented by different hash marks for the nodes in Figure 7. In this example, the thickness of the edges is scaled based on the basic deterministic slack values.

In accordance with an illustrative embodiment, network diagram 700 also may provide an interface whereby an operator may obtain additional information. For example, without limitation, network diagram 700 may be configured such that an operator may select displayed nodes, edges, or both, to obtain additional information related to corresponding tasks and relationships between tasks. For example, network diagram 700 may be configured such that when an operator controls a mouse to hover a curser over one of the nodes in network diagram 700, a dialog box appears which provides additional information. This additional information may include one or more links to further additional information.

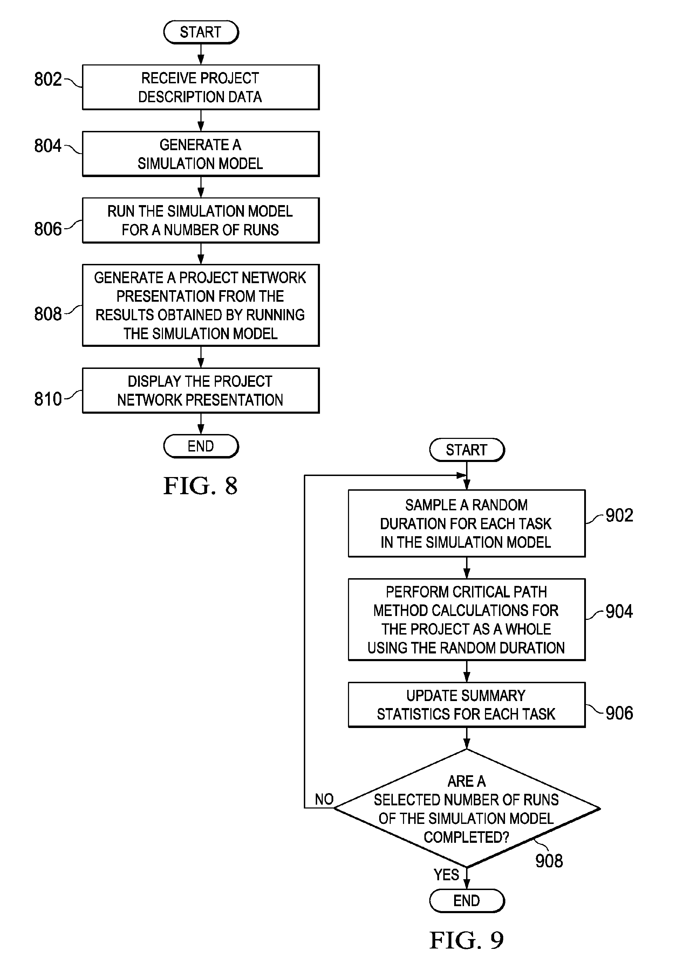

Turning now to Figure 8, an illustration of a flowchart of a process for project planning is depicted in accordance with an illustrative embodiment. For example, the process of Figure 8 may be implemented in project planning and management system 200 in Figure 2.

The process begins with receiving project description data (operation 802). The received project description data is used to generate a simulation model (operation 804). The simulation model then may be run for a number of runs (operation 806). A project network presentation may be generated from the results obtained by running the simulation model (operation 808). The project network presentation then may be displayed (operation 810), with the process terminating thereafter.

Turning now to Figure 9, an illustration of a flowchart of a process for running a simulation model for project planning is depicted in accordance with an illustrative embodiment. In this example, the process of Figure 9 is one example of a process for implementing operation 806 in Figure 8.

The process begins by sampling a random duration for each task in the simulation model (operation 902). Critical path method calculations then may be performed for the project as a whole using the random durations (operation 904). Summary statistics for each task then may be updated (operation 906). It then may be determined whether a selected number of runs of the simulation model has been completed (operation 908). The selected number of runs may be a fixed or operator selectable value. If the selected number of runs has not been completed, the process repeats with operation 902. If the selected number of runs has been completed, the process terminates.

One or more of the illustrative embodiments provides a decision support tool for project network analysis. The illustrative embodiments provide a simulation model generation tool and visualization to improve understanding of a project network for a project comprising a discrete set of tasks in a manufacturing or other project environment. One or more of the illustrative embodiments provides the capability to improve manufacturing and other project processes and to support the optimization of resource investment. Expected task durations may be shortened by the addition of expediting resources. Decisions regarding the allocation of scarce resources may be improved by the stochastic nature of illustrative embodiments. The illustrative embodiments recognize and take into account the variability inherent in task durations and employ simulation to capture and understand this variability to improve project planning and management.

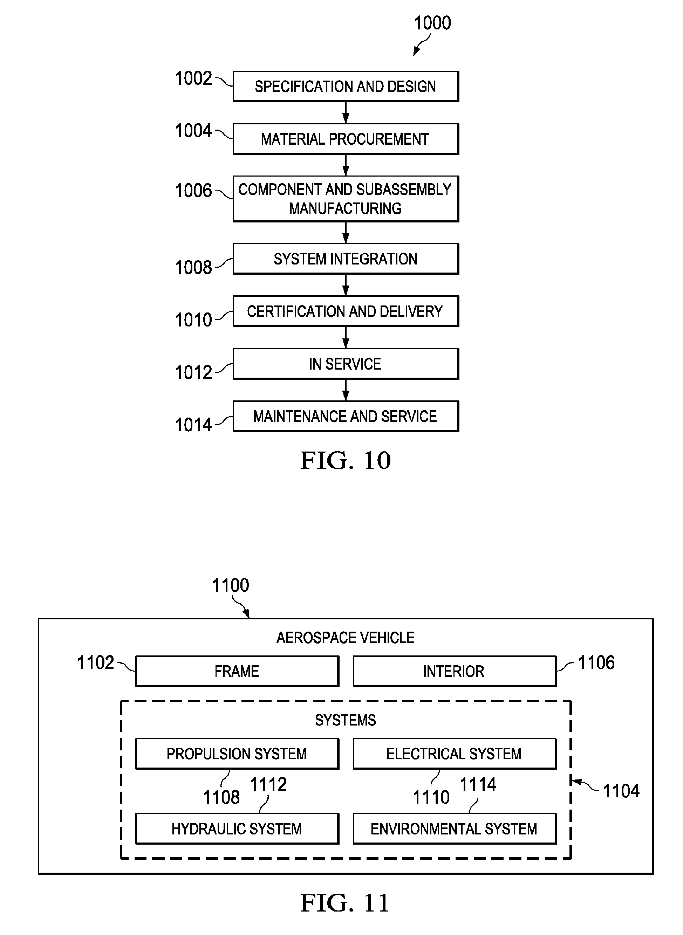

Embodiments of the disclosure may be described in the context of aerospace vehicle manufacturing and service method 1000 as shown in Figure 10 and aerospace vehicle 1100 as shown in Figure 11. Turning first to Figure 10, an illustration of a block diagram of an aerospace vehicle manufacturing and service method is depicted in accordance with an illustrative embodiment.

During pre-production, aerospace vehicle manufacturing and service method 1000 may include specification and design 1002 of aerospace vehicle 1100 in Figure 11 and material procurement 1004. During production, component and subassembly manufacturing 1006 and system integration 1008 of aerospace vehicle 1100 in Figure 11 takes place. Thereafter, aerospace vehicle 1100 in Figure 11 may go through certification and delivery 1010 in order to be placed in service 1012.

While in service 1012 by a customer, aerospace vehicle 1100 in Figure 11 is scheduled for routine maintenance and service 1014, which may include modification, reconfiguration, refurbishment, and other maintenance or service. In this example, aerospace vehicle manufacturing and service method 1000 is shown as a method for aerospace vehicles. The different illustrative embodiments may be applied to other types of manufacturing and service methods, including manufacturing and service methods for other types of platforms, including other types of vehicles.

Each of the processes of aerospace vehicle manufacturing and service method 1000 may be performed or carried out by a system integrator, a third party, an operator, or by any combination of such entities. In these examples, the operator may be a customer. For the purposes of this description, a system integrator may include, without limitation, any number of aerospace vehicle manufacturers and major-system subcontractors. A third party may include, without limitation, any number of venders, subcontractors, and suppliers. An operator may be a company, a military entity, a service organization, and so on.

With reference now to Figure 11, an illustration of a block diagram of an aerospace vehicle for which an illustrative embodiment may be implemented is depicted. In this illustrative example, aerospace vehicle 1100 is produced by aerospace vehicle manufacturing and service method 1000 in Figure 10. Aerospace vehicle 1100 may include an aircraft, a spacecraft, or any other vehicle for traveling through the air, for traveling through space, or which is capable of operation in both air and space. Aerospace vehicle 1100 may include frame 1102 with plurality of systems 1104 and interior 1106.

Examples of plurality of systems 1104 include one or more of propulsion system 1108, electrical system 1110, hydraulic system 1112, and environmental system 1114. Illustrative embodiments may be used for the planning of projects related to the manufacture, operation, or maintenance of aerospace vehicle 1100, plurality of systems 1104, or any other components of aerospace vehicle 1100. The illustrative embodiments also may be used for the management of such projects. Although an aerospace example is shown, different illustrative embodiments may be applied to other industries, such as the automotive industry.

An apparatus or method as described herein may be employed during at least one of the stages of aerospace vehicle manufacturing and service method 1000 in Figure 10. As used herein, the phrase "at least one of", when used with a list of items, means that different combinations of one or more of the listed items may be used and only one of each item in the list may be needed. For example, "at least one of item A, item B, and item C" may include, for example, without limitation, item A, or item A and item B. This example also may include item A, item B, and item C, or item B and item C.

In one illustrative example, components or subassemblies produced in component and subassembly manufacturing 1006 in Figure 10 may be fabricated or manufactured in a manner similar to components or subassemblies produced while aerospace vehicle 1100 is in service 1012 in Figure 10.

As yet another example, a number of apparatus embodiments, method embodiments, or a combination thereof may be utilized during production stages, such as component and subassembly manufacturing 1006 and system integration 1008 in Figure 10. "A number", when referring to items, means one or more items. For example, "a number of apparatus embodiments" is one or more apparatus embodiments. A number of apparatus embodiments, method embodiments, or a combination thereof may be utilized while aerospace vehicle 1100 is in service 1012, during maintenance and service 1014 in Figure 10, or both.

The use of a number of the different illustrative embodiments may substantially expedite the assembly of aerospace vehicle 1100. A number of the different illustrative embodiments may reduce the cost of aerospace vehicle 1100. For example, one or more of the different illustrative embodiments may be used during component and subassembly manufacturing 1006, during system integration 1008, or both. Further, the different illustrative embodiments also may be used during in service 1012, during maintenance and service 1014 in Figure 10, or both. The different illustrative embodiments may be used during these and other parts of aerospace vehicle manufacturing and service method 1000 in Figure 10 for more effective project planning and management.

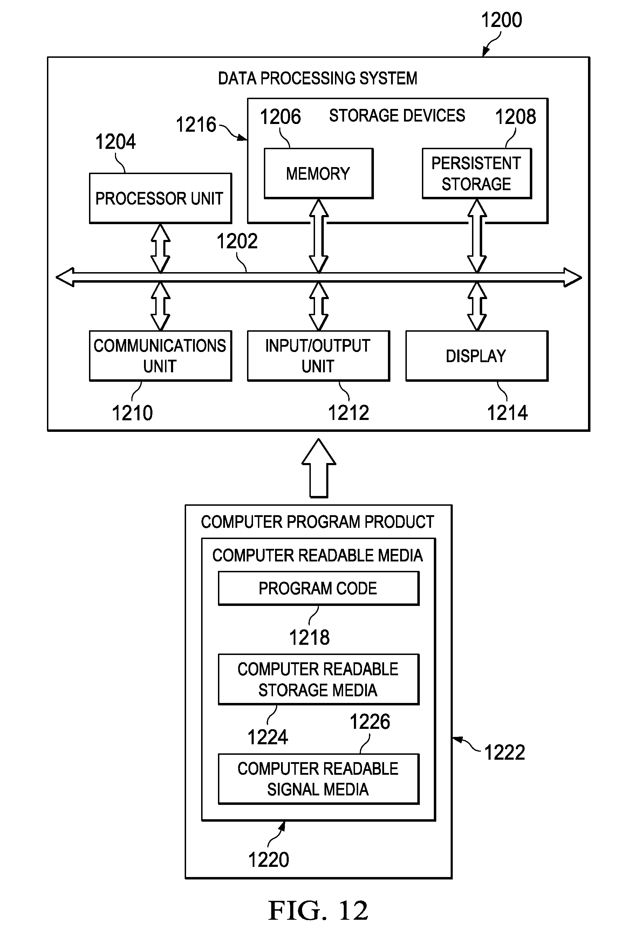

Turning now to Figure 12, an illustration of a block diagram of a data processing system is depicted in accordance with an illustrative embodiment. In this example, data processing system 1200 is an example of one implementation of data processing system 202 in Figure 2. In this illustrative example, data processing system 1200 includes communications fabric 1202. Communications fabric 1202 provides communications between processor unit 1204, memory 1206, persistent storage 1208, communications unit 1210, input/output (I/O) unit 1212, and display 1214. Memory 1206, persistent storage 1208, communications unit 1210, input/output (I/O) unit 1212, and display 1214 are examples of resources accessible by processor unit 1204 via communications fabric 1202.

Processor unit 1204 serves to run instructions for software that may be loaded into memory 1206. Processor unit 1204 may be a number of processors, a multi-processor core, or some other type of processor, depending on the particular implementation. Further, processor unit 1204 may be implemented using a number of heterogeneous processor systems in which a main processor is present with secondary processors on a single chip. As another illustrative example, processor unit 1204 may be a symmetric multi-processor system containing multiple processors of the same type.

Memory 1206 and persistent storage 1208 are examples of storage devices 1216. A storage device is any piece of hardware that is capable of storing information, such as, for example, without limitation, data, program code in functional form, and other suitable information either on a temporary basis or a permanent basis. Storage devices 1216 also may be referred to as computer readable storage devices in these examples. Memory 1206, in these examples, may be, for example, a random access memory or any other suitable volatile or non-volatile storage device. Persistent storage 1208 may take various forms, depending on the particular implementation.

For example, persistent storage 1208 may contain one or more components or devices. For example, persistent storage 1208 may be a hard drive, a flash memory, a rewritable optical disk, a rewritable magnetic tape, or some combination of the above. The media used by persistent storage 1208 also may be removable. For example, a removable hard drive may be used for persistent storage 1208.

Communications unit 1210, in these examples, provides for communications with other data processing systems or devices. In these examples, communications unit 1210 is a network interface card. Communications unit 1210 may provide communications through the use of either or both physical and wireless communications links.

Input/output unit 1212 allows for input and output of data with other devices that may be connected to data processing system 1200. For example, input/output unit 1212 may provide a connection for user input through a keyboard, a mouse, and/or some other suitable input device. Further, input/output unit 1212 may send output to a printer. Display 1214 provides a mechanism to display information to a user.

Instructions for the operating system, applications, and/or programs may be located in storage devices 1216, which are in communication with processor unit 1204 through communications fabric 1202. In these illustrative examples, the instructions are in a functional form on persistent storage 1208. These instructions may be loaded into memory 1206 for execution by processor unit 1204. The processes of the different embodiments may be performed by processor unit 1204 using computer-implemented instructions, which may be located in a memory, such as memory 1206.

These instructions are referred to as program instructions, program code, computer usable program code, or computer readable program code that may be read and executed by a processor in processor unit 1204. The program code in the different embodiments may be embodied on different physical or computer readable storage media, such as memory 1206 or persistent storage 1208.

Program code 1218 is located in a functional form on computer readable media 1220 that is selectively removable and may be loaded onto or transferred to data processing system 1200 for execution by processor unit 1204. Program code 1218 and computer readable media 1220 form computer program product 1222 in these examples. In one example, computer readable media 1220 may be computer readable storage media 1224 or computer readable signal media 1226.

Computer readable storage media 1224 may include, for example, an optical or magnetic disk that is inserted or placed into a drive or other device that is part of persistent storage 1208 for transfer onto a storage device, such as a hard drive, that is part of persistent storage 1208. Computer readable storage media 1224 also may take the form of a persistent storage, such as a hard drive, a thumb drive, or a flash memory, that is connected to data processing system 1200. In some instances, computer readable storage media 1224 may not be removable from data processing system 1200.

In these examples, computer readable storage media 1224 is a physical or tangible storage device used to store program code 1218 rather than a medium that propagates or transmits program code 1218. Computer readable storage media 1224 is also referred to as a computer readable tangible storage device or a computer readable physical storage device. In other words, computer readable storage media 1224 is a media that can be touched by a person.

Alternatively, program code 1218 may be transferred to data processing system 1200 using computer readable signal media 1226. Computer readable signal media 1226 may be, for example, a propagated data signal containing program code 1218. For example, computer readable signal media 1226 may be an electromagnetic signal, an optical signal, and/or any other suitable type of signal. These signals may be transmitted over communications links, such as wireless communications links, optical fiber cable, coaxial cable, a wire, and/or any other suitable type of communications link. In other words, the communications link and/or the connection may be physical or wireless in the illustrative examples.

In some illustrative embodiments, program code 1218 may be downloaded over a network to persistent storage 1208 from another device or data processing system through computer readable signal media 1226 for use within data processing system 1200. For instance, program code stored in a computer readable storage medium in a server data processing system may be downloaded over a network from the server to data processing system 1200. The data processing system providing program code 1218 may be a server computer, a client computer, or some other device capable of storing and transmitting program code 1218.

The different components illustrated for data processing system 1200 are not meant to provide architectural limitations to the manner in which different embodiments may be implemented. The different illustrative embodiments may be implemented in a data processing system including components in addition to and/or in place of those illustrated for data processing system 1200. Other components shown in Figure 12 can be varied from the illustrative examples shown. The different embodiments may be implemented using any hardware device or system capable of running program code. As one example, data processing system 1200 may include organic components integrated with inorganic components and/or may be comprised entirely of organic components excluding a human being. For example, a storage device may be comprised of an organic semiconductor.

In another illustrative example, processor unit 1204 may take the form of a hardware unit that has circuits that are manufactured or configured for a particular use. This type of hardware may perform operations without needing program code to be loaded into a memory from a storage device to be configured to perform the operations.

For example, when processor unit 1204 takes the form of a hardware unit, processor unit 1204 may be a circuit system, an application specific integrated circuit (ASIC), a programmable logic device, or some other suitable type of hardware configured to perform a number of operations. With a programmable logic device, the device is configured to perform the number of operations. The device may be reconfigured at a later time or may be permanently configured to perform the number of operations. Examples of programmable logic devices include, for example, a programmable logic array, a programmable array logic, a field programmable logic array, a field programmable gate array, and other suitable hardware devices. With this type of implementation, program code 1218 may be omitted, because the processes for the different embodiments are implemented in a hardware unit.

In still another illustrative example, processor unit 1204 may be implemented using a combination of processors found in computers and hardware units. Processor unit 1204 may have a number of hardware units and a number of processors that are configured to run program code 1218. With this depicted example, some of the processes may be implemented in the number of hardware units, while other processes may be implemented in the number of processors.

In another example, a bus system may be used to implement communications fabric 1202 and may be comprised of one or more buses, such as a system bus or an input/output bus. Of course, the bus system may be implemented using any suitable type of architecture that provides for a transfer of data between different components or devices attached to the bus system.

Additionally, communications unit 1210 may include a number of devices that transmit data, receive data, or both transmit and receive data. Communications unit 1210 may be, for example, a modem or a network adapter, two network adapters, or some combination thereof. Further, a memory may be, for example, memory 1206, or a cache, such as found in an interface and memory controller hub that may be present in communications fabric 1202.

In the text and the figures, a method is disclosed for generating a project plan, the method including: receiving, by a processor unit 1204 , project description information 206 for a project 104 including a plurality of tasks 110, the project description information 206 including information describing precedence relationships between tasks 110, information indicating durations of the tasks, and information indicating variability 116 in the durations of the tasks 110, generating, by the processor unit 1204, a simulation model 228 for the project 104 using the project description information 206, running the simulation model 228 for a plurality of runs 234 to identify a subset of tasks 110 forming a critical path and to generate simulation results data 248, and generating a project network presentation 256 from the simulation results data, the project network presentation 256 including the identified subset of the tasks110 forming the critical path 104.

The method further includes wherein the project description information 206 is received by the processor unit 1204 in an information format selected from a group of information formats 218 consisting of a text file 220, an electronic spreadsheet file 222, and an Extensible Markup Language file. The method further includes wherein generating the simulation model 228 for the project 104 includes determining a statistical form for modeling the durations of the tasks 110 based on the information indicating the durations of the tasks 110 and the information indicating the variability in the durations of the tasks 110.

In one variant, the method includes wherein running the simulation model (228) for the plurality of runs 234 to generate the simulation results data includes identifying random durations for the tasks 110 using the information indicating the durations of the tasks 110 and the information indicating the variability 116 in the durations of the tasks 110, identifying the subset of the tasks 110 forming the critical path for the project 104 for each of the random durations; and updating summary statistics for each of the tasks 110. In one variant, the method includes wherein the summary statistics indicate a number of the plurality of runs 234 that a task is identified as being in the critical path. In one example, the method includes wherein the project network presentation 256 indicates a plurality of subsets of tasks 110 based on slack of tasks 110 in the plurality of subsets of tasks 110, wherein the plurality of subsets of tasks 110 includes the subset of the tasks 110 forming the critical path and at least two other subsets of tasks 110 that are not in the critical path.

In yet another example, the method includes wherein the project network presentation 256 includes nodes 262 corresponding to the tasks 110 and edges 264 connecting nodes 262 to indicate a relationship between the nodes 262 and wherein the nodes 262 are highlighted to indicate ranges of slack for corresponding tasks 110. In one variant, the method includes wherein the nodes 262 are highlighted using different colors to indicate different ranges of slack. In yet another variant, the method includes wherein a thickness of the edges 264 indicates slack values for the tasks 110 corresponding to the nodes 262 that are connected by the edges 264.

In one aspect, an apparatus is disclosed including a processor unit 1204 configured to receive project description information 206 for a project 104 including a plurality of tasks 110, the project description information 206 including information describing precedence relationships between tasks 110, information indicating durations of the tasks, and information indicating variability 116 in the durations of the tasks 110, a simulation model 228 generator configured to generate a simulation model 228 for the project 104 using the project description information 206, a simulator 244 configured to run the simulation model 228 for a plurality of runs 234 to identify a subset of tasks 110 forming a critical path and to generate simulation results data 248, and a presentation generator 250 configured to generate a project network presentation 256 from the simulation results data 248, the project network presentation 256 including an indication of the subset of the tasks 110 forming the critical path. In yet another aspect, the apparatus includes wherein the project description information 206 is received by the processor unit 1204 in an information format selected from a group of information formats 218 consisting of a text file, an electronic spreadsheet file 222, and an Extensible Markup Language file. In another example, the apparatus includes wherein the simulation model generator 228 is configured to determine a statistical form for modeling the durations of the tasks 110 based on the information indicating the durations of the tasks 110 and the information indicating the variability 116 in the durations of the tasks 110. In one instance, the apparatus includes wherein the simulator 244 is configured to: identify random durations for the tasks 110 using the information indicating the durations of the tasks 110 and the information indicating the variability 116 in the durations of the tasks 110, identify the subset of the tasks 110 forming the critical path for the project 104 for each of the random durations, and update summary statistics for each of the tasks 110. In yet another instance, the apparatus of claim 13, wherein the summary statistics indicate a number of the plurality of runs 234 that a task is identified as being in the critical path.

In yet another example, the apparatus includes wherein the project network presentation 256 indicates a plurality of subsets of tasks 110 based on slack of tasks 110 in the plurality of subsets of tasks 110, wherein the plurality of subsets of tasks 110 includes the subset of the tasks 110 forming the critical path and at least two other subsets of tasks 110 that are not in the critical path. In yet another example, the apparatus includes wherein the project network presentation 256 includes nodes 262 corresponding to the tasks 110 and edges 264 connecting the nodes 262 to indicate a relationship between the nodes 262 and wherein the nodes 262 are highlighted to indicate ranges of slack for corresponding tasks 110. In another instance, the apparatus includes wherein the nodes 262 are highlighted using different colors to indicate different ranges of slack. In one example, the apparatus includes wherein a thickness of the edges 264 indicates slack values for the tasks 110 corresponding to the nodes 262 that are connected by the edges 264.

In another aspect, a method is disclosed for generating a project plan, the method includes: receiving, by a processor unit 1204, project description information 206 for a project comprising a plurality of tasks 110, the project description information 206 comprising information describing precedence relationships between tasks 110, information indicating durations of the tasks 110, and information indicating variability 116 in the durations of the tasks 110, and generating a project network presentation 256 from the project description information 206, the project network presentation 256 including an indication of a subset of the tasks 110 forming a critical path for completing the project 104, wherein the project network presentation 256 includes nodes 262 corresponding to the tasks 110 and edges 264 connecting the nodes 262 to indicate a relationship between the nodes 262 and wherein the nodes 262 are highlighted to indicate likelihoods that corresponding tasks 110 are on the critical path. In yet another instance, the method includes wherein a thickness of the edges 264 indicates slack values for the tasks 110 corresponding to the nodes 262 that are connected by the edges 262.

The flowcharts and block diagrams depicted herein illustrate the architecture, functionality, and operation of some possible implementations of illustrative embodiments. In this regard, each block in the flowcharts or block diagrams may represent a module, segment, function, or a portion of an operation or step. In some alternative implementations, the function or functions noted in a block may occur out of the order depicted in the figures. For example, in some cases, the functions of two blocks shown in succession may be executed substantially concurrently, or the functions may sometimes be executed in the reverse of the order depicted by the blocks, depending on the functionality involved. Also, other blocks for the depicted functions, for additional functions, or both, may be added to the illustrated blocks in a depicted flowchart or block diagram.

The description of the different illustrative embodiments has been presented for purposes of illustration and description and is not intended to be exhaustive or to limit the embodiments in the form disclosed. Many modifications and variations will be apparent to those of ordinary skill in the art. Further, different illustrative embodiments may provide different features as compared to other illustrative embodiments. The embodiment or embodiments selected are chosen and described in order to best explain the principles of the embodiments, the practical application, and to enable others of ordinary skill in the art to understand the disclosure for various embodiments with various modifications as are suited to the particular use contemplated.

## Claims

1. A method for generating a project plan, the method comprising:
receiving, by a processor unit (1204), project description information (206) for a project (104) comprising a plurality of tasks (110), the project description information (206) comprising information describing precedence relationships between tasks (110), information indicating durations of the tasks, and information indicating variability (116) in the durations of the tasks (110);
generating, by the processor unit (1204), a simulation model (228) for the project (104) using the project description information (206);
running the simulation model (228) for a plurality of runs (234) to identify a subset of tasks (110) forming a critical path and to generate simulation results data (248); and
generating a project network presentation (256) from the simulation results data, the project network presentation (256) including the identified subset of the tasks(110) forming the critical path (104);
wherein the project description information (206) is received by the processor unit (1204) in an information format selected from a group of information formats (218) consisting of a text file (220), an electronic spreadsheet file (222), and an Extensible Markup Language file.

2. The method of claim 1, wherein generating the simulation model (228) for the project (104) comprises determining a statistical form for modeling the durations of the tasks (110) based on the information indicating the durations of the tasks (110) and the information indicating the variability in the durations of the tasks (110).

3. The method of any of claims 1 or 2, wherein running the simulation model (228) for the plurality of runs (234) to generate the simulation results data comprises:
identifying random durations for the tasks (110) using the information indicating the durations of the tasks (110) and the information indicating the variability (116) in the durations of the tasks (110);
identifying the subset of the tasks (110) forming the critical path for the project (104) for each of the random durations; and
updating summary statistics for each of the tasks (110);
wherein the summary statistics indicate a number of the plurality of runs (234) that a task is identified as being in the critical path.

4. The method of any of claims 1-3, wherein the project network presentation (256) indicates a plurality of subsets of tasks (110) based on slack of tasks (110) in the plurality of subsets of tasks (110), wherein the plurality of subsets of tasks (110) includes the subset of the tasks (110) forming the critical path and at least two other subsets of tasks (110) that are not in the critical path.

5. The method of any of claims 1-3, wherein the project network presentation (256) includes nodes (262) corresponding to the tasks (110) and edges (264) connecting nodes (262) to indicate a relationship between the nodes (262) and wherein the nodes (262) are highlighted to indicate ranges of slack for corresponding tasks (110);
wherein the nodes (262) are highlighted using different colors to indicate different ranges of slack; and
wherein a thickness of the edges (264) indicates slack values for the tasks (110) corresponding to the nodes (262) that are connected by the edges (264).

6. An apparatus comprising:
a processor unit (1204) configured to receive project description information (206) for a project (104) comprising a plurality of tasks (110), the project description information (206) comprising information describing precedence relationships between tasks (110), information indicating durations of the tasks, and information indicating variability (116) in the durations of the tasks (110);
a simulation model (228) generator configured to generate a simulation model (228) for the project (104) using the project description information (206);
a simulator (244) configured to run the simulation model (228) for a plurality of runs (234) to identify a subset of tasks (110) forming a critical path and to generate simulation results data (248); and
a presentation generator (250) configured to generate a project network presentation (256) from the simulation results data (248), the project network presentation (256) including an indication of the subset of the tasks (110) forming the critical path;
wherein the project description information (206) is received by the processor unit (1204) in an information format selected from a group of information formats (218) consisting of a text file, an electronic spreadsheet file (222), and an Extensible Markup Language file.

7. The apparatus of claim 6, wherein the simulation model generator (228) is configured to determine a statistical form for modeling the durations of the tasks (110) based on the information indicating the durations of the tasks (110) and the information indicating the variability (116) in the durations of the tasks (110).

8. The apparatus of any of claims 6 or 7, wherein the simulator (244) is configured to:
identify random durations for the tasks (110) using the information indicating the durations of the tasks (110) and the information indicating the variability (116) in the durations of the tasks (110);
identify the subset of the tasks (110) forming the critical path for the project (104) for each of the random durations; and
update summary statistics for each of the tasks (110);
wherein the summary statistics indicate a number of the plurality of runs (234) that a task is identified as being in the critical path.

9. The apparatus of any of claims 6-8, wherein the project network presentation (256) indicates a plurality of subsets of tasks (110) based on slack of tasks (110) in the plurality of subsets of tasks (110), wherein the plurality of subsets of tasks (110) includes the subset of the tasks (110) forming the critical path and at least two other subsets of tasks (110) that are not in the critical path.

10. The apparatus of any of claims 6-9, wherein the project network presentation (256) includes nodes (262) corresponding to the tasks (110) and edges (264) connecting the nodes (262) to indicate a relationship between the nodes (262) and wherein the nodes (262) are highlighted to indicate ranges of slack for corresponding tasks (110);
wherein the nodes (262) are highlighted using different colors to indicate different ranges of slack; and
wherein a thickness of the edges (264) indicates slack values for the tasks (110) corresponding to the nodes (262) that are connected by the edges (264).
